(19) Europäisches Patentamt
European Patent Office
Office européen des brevets

(11) **EP 2 110 651 B1**

(12) **EUROPEAN PATENT SPECIFICATION**

(45) Date of publication and mention
of the grant of the patent:
**07.06.2017 Bulletin 2017/23**

(51) Int Cl.:
***G01D 5/353*** *(2006.01)*    ***G01M 11/08*** *(2006.01)*
***G01L 1/24*** *(2006.01)*    ***G01K 11/32*** *(2006.01)*

(21) Application number: **08007624.3**

(22) Date of filing: **18.04.2008**

(54) **Method and system for simultaneous measurement of strain and temperature**

Verfahren und System zur simultanen Spannung- und Temperaturmessung

Procédé et système de mesure simultanée de contrainte et de température

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**21.10.2009 Bulletin 2009/43**

(73) Proprietor: **OZ Optics Ltd.
Nepean, Ontario K2H 7T9 (CA)**

(72) Inventors:
• **Sezerman, Omur M.
Kanata, ON K2K 2M7 (CA)**
• **Zou, Lufan
Ontario, K2H 7T9 (CA)**

(74) Representative: **Serjeants LLP
Dock
75 Exploration Drive
Leicester, LE4 5NU (GB)**

(56) References cited:
**JP-A- H11 287 670    JP-A- 2009 080 048
US-A1- 2003 103 549    US-A1- 2008 084 914**

**Description**

The present invention relates to a method and system for the simultaneous measurement of strain and temperature utilizing principles associated with Brillouin scattering.

**BACKGROUND OF THE INVENTION**

Brillouin scattering is an inelastic or nonlinear scattering of light from acoustic phonons in a dielectric material, such as an optical fiber. Brillouin scattering can be spontaneous, as when light in a fiber interacts with density variations in the fiber, or it can be stimulated. The Brillouin frequency is the difference between the frequencies of the input and scattered beams of light within the fiber. The Brillouin frequency can be described by the equation:

$$v_B = \frac{2nV_a}{\lambda_p} \sin\frac{\theta}{2} \qquad (1)$$

where: $V_a$ is the sound velocity in the optical fiber;
n is the refractive index;
$\lambda p$ is the wavelength of the pump laser.

The Brillouin frequency is a physical property that is related to temperature and strain within the optical fiber, in accordance with the following equation:

$$v_B = v_{B0} + C_T(T - T_0) + C_\varepsilon(\varepsilon - \varepsilon_0) \qquad (2)$$

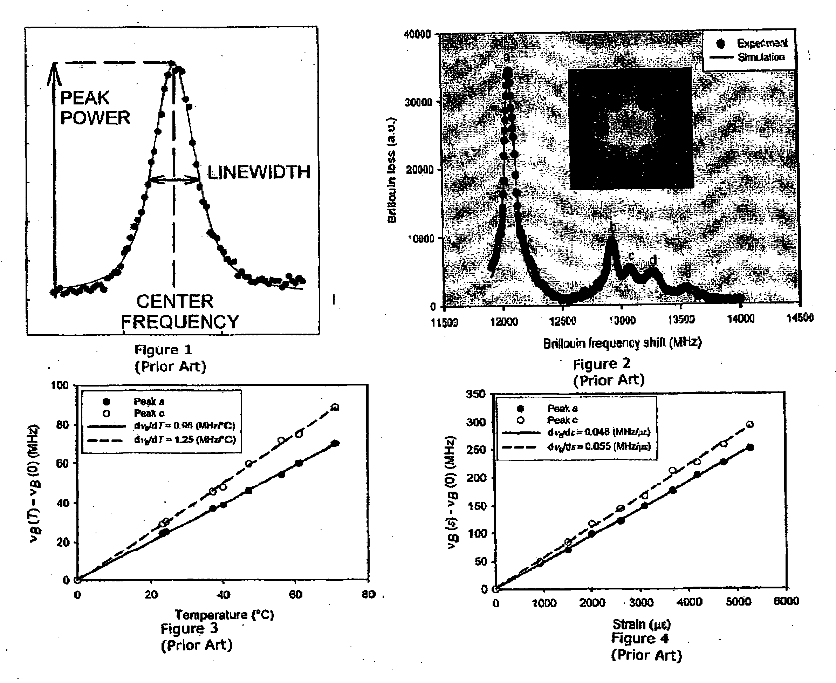

where $C_T$ and $C_\varepsilon$ are coefficients of temperature (T) and strain ($\varepsilon$), respectively. These coefficients are determined experimentally for each fiber.
With Brillouin amplification, the scattered light is amplified. There can be an energy exchange between two counter-propagating laser beams, which exchange is maximum when $v_1 - v_2 = v_B$.
The Brillouin frequency spectrum is obtained by scanning the beat frequency of the fiber. It is characterized by the peak power, the shape of the frequency curve, the center frequency, and the linewidth, with full linewidth occurring at half-maximum (see Figure 1).
It has been known that the principles of Brillouin scattering can be used to measure strain or temperature in an optical fiber. Because there is only one peak of a Brillouin spectrum from a single mode fiber (eg. SMF-28) and because strain and temperature change simultaneously in accordance with equation 2, it is impossible to simultaneously extract information respecting both strain and temperature from a single peak of the Brillouin spectrum.
In the past, when it has been desired to measure both strain and temperature simultaneously, it has been necessary to take special measures to achieve these measurements. For example, if temperature is maintained constant it is possible to measure strain, or if the strain is maintained constant it is possible to measure temperature. Another measure would be to install an additional fiber for temperature measurement in order to compensate for the temperature influence on the Brillouin spectrum caused by both temperature and strain. One then could measure both the Brillouin frequency and the intensity of the Brillouin spectrum. Alternatively, one can use special fibers, such as photonic crystal fiber (PCF), or large effective area fiber (LEAF) as the sensing media.
Figure 2 shows simultaneous measurement of strain and temperature using PCF and LEAF.
US2003/0103549 A1 is an example of the use of such special LEAF fiber.
Figure 3 shows the effect of temperature with such measurements, where it is seen that the central frequencies of the peaks at *a* and *c* increased linearly with temperature. The temperature coefficients are 0.96 for peak *a* and 1.23 MHz/°C for peak c at 1320 nm. The pulse width was 1.5 ns ~15 cm spatial resolution.
Figure 4 shows the effect of strain with such measurements, where it is seen that the Brillouin frequencies of peaks *a* and *c* have a linear dependence on the strain. The strain coefficients are $4.78 \times 10^{-2}$ for peak *a* and $5.5 \times 10^{-2}$ MHz/$\mu\varepsilon$ for peak *c* at 1320 nm. The pulse width was 1.5 ns ~15 cm spatial resolution.
There are disadvantages to using PCF or LEAF for simultaneous measurement of strain and temperature. In real-life applications, peak c is easily covered by the noise resulting in a low signal to noise ratio. The intensity of the peak may vary greatly because of tension or compression in the fiber. In order to increase the spatial resolution, an increased baseline for the input pulses may be required, resulting in a complication of the Brillouin spectrum, and increased difficulties in identifying peak c.

US2008/0084914 A1 discloses further alternatives for simultaneously measuring strain and temperature, by using two optical fibers, either parallel or multicore fibers with a BOTDR measurement technique, or two fibers spliced at one of their repective ends and using BOCDA measurement technique by inputting light into the two other respective ends of the fibers.

There is therefore a need to devise a method and a system for the simultaneous measurement of strain and temperature in an optical fiber, and which does not suffer from the drawbacks associated with present methods and systems.

## SUMMARY OF THE INVENTION

The present provides a method and a system which meets the above requirements. The present invention utilizes a pair of fibers connected together, with one of the fibers having a refractive index that differs from that of the other fiber. For example, a first fiber uses pure silica as the cladding and pure silica doped with Ge as the core, and the second fiber uses pure silica doped with F as the cladding and pure silica as the core. Another example has a first fiber using pure silica as the cladding and pure silica doped with Ge as the core, and a second fiber using pure silica as the cladding and pure silica doped with a different dose of Ge as the core, such as SMF-28 and LEAF. Preferred fibers for this invention are single mode fibers (SMF), because they are cheaper and more conventional.

The first and second fibers are spliced together at one end only. The non-spliced end of only one of the fibers is used for input/output of a single laser.

Broadly speaking, therefore, the present invention can be considered as providing a method of simultaneously determining strain and temperature characteristics of an object comprising the steps of: providing first and second optical fibers having different refractive indices; determining coefficients of strain and temperature for each of the fibers; connecting the fibers together at one end thereof; securing the fibers to the object along a length thereof; inputting laser light into only one of the fibers at the other end thereof; measuring the Brillouin frequency for each of the fibers; and calculating strain and temperature characteristics based on the coefficients of strain and temperature and the measured Brillouin frequencies for the fibers.

The present invention also contemplates a system for simultaneously determining strain and temperature characteristics of an object comprising: first and second optical fibers having different refractive indices; means connecting the first and second fibers together at one end thereof; means securing the fibers to the object to be monitored; laser means for inputting laser light into only one of the fibers at the other end thereof; means for measuring the Brillouin frequency for each of the fibers; and means for calculating strain and temperature characteristics based on the coefficients of strain and temperature as well as the measured Brillouin frequencies for the fibers.

## BRIEF DESCRIPTION OF THE DRAWINGS

Figure 1 is a graph showing the Brillouin frequency spectrum of an optical fiber as well as the peak power thereof.
Figure 2 is a graph showing Brillouin loss as a function of the Brillouin frequency shift
for PC and LEA fibers.
Figure 3 is a graph showing the effect of temperature on Brillouin measurements.
Figure 4 is a graph showing the effect of strain on Brillouin measurements.
Figure 5 shows a first arrangement of optical fibers that is not in accordance with the invention as defined in the claims.
Figure 6a shows an alternative arrangement of optical fibers that is not in accordance with the invention as defined in the claims.
Figure 6b shows an alternative arrangement of optical fibers in accordance with the present invention.
Figures 7A and 7B are graphs showing strain coefficients for optical fibers having different refractive indices in an arrangement of the present invention.
Figure 8 shows a pair of optical fibers in accordance with the present invention, spliced together at one end and installed on a section of a steel pipeline.
Figures 9A and 9B are graphs showing $v_B$ for the two optical fibers used in the example of Figure 8.

## DETAILED DESCRIPTION OF THE INVENTION

The present invention utilizes a pair of fibers connected or installed together, with one of the fibers having a refractive index that differs from that of the other fiber. For example, a first fiber uses pure silica as the cladding and pure silica doped with Ge as the core, and the second fiber uses pure silica doped with F as the cladding and pure silica as the core. Another example has a first fiber using pure silica as the cladding and pure silica doped with Ge as the core, and a second fiber using pure silica as the cladding and pure silica doped with a different dose of Ge as the core, such as SMF-28 and LEAF. Preferred fibers for this invention are single mode fibers (SMF), because they are cheaper and more conventional. The fibers are connected together at one end thereof and laser light will be pumped into only one of the fibers, with suitable means being provided for measuring the Brillouin frequencies of the respective fibers.

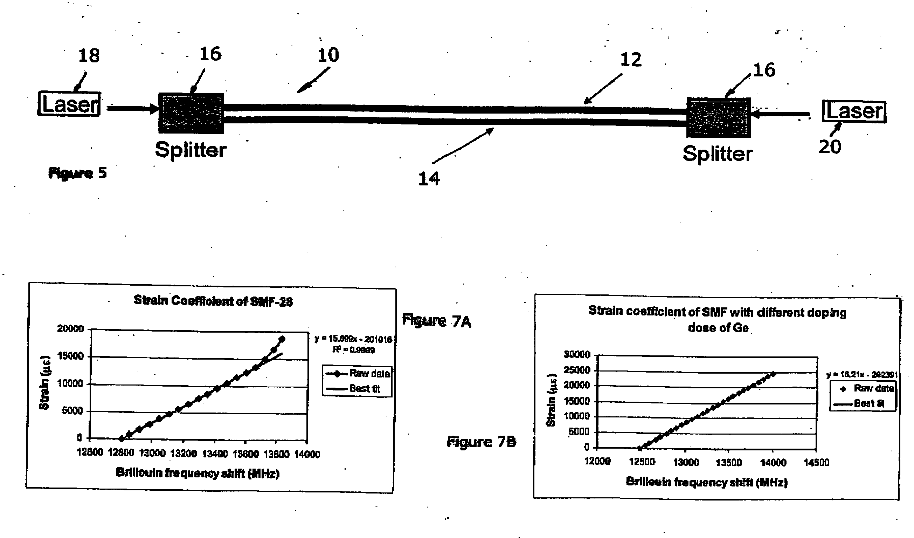

Figure 5 shows a first example 10 (not in accordance with the invention as defined in the claims) of first 12 and second 14 single mode fibers connected to a splitter 16 at each end, with the splitters being used as input/output or inputs of probe and pump lasers 18, 20.

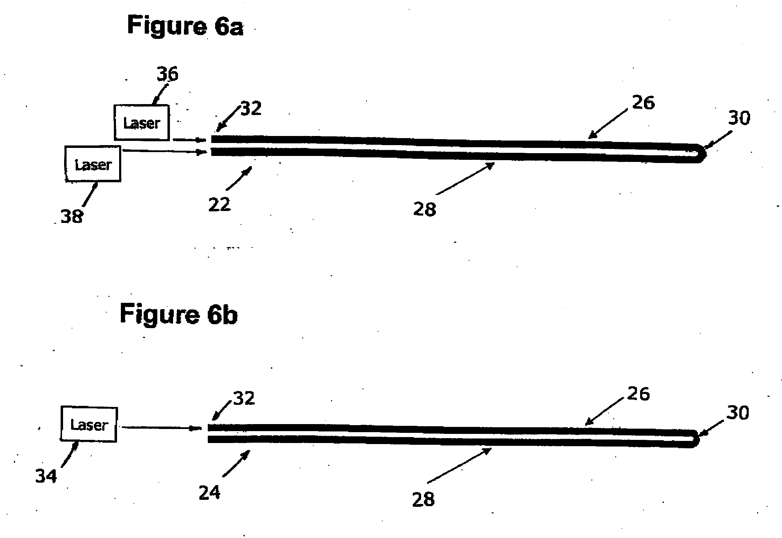

Figure 6a shows a first alternative arrangement 22 (not in accordance with the invention as defined in the claims) of first 26 and second 28 single mode fibers spliced together at one end 30, with the other ends 32 being used for inputs of probe and pump lasers 36, 38.

Figure 6b shows a second alternative arrangement 24 of first 26 and second 28 single mode fibers spliced together at one end 30, with the other end 32 of one of the fibers 26 being used for input/output of a single laser 34, in accordance with the present invention.

In each of these examples the first and second single mode fibers have different refractive indices.

Each of the two fibers will provide one peak of the Brillouin spectrum but the two Brillouin spectra will have different Brillouin frequencies. The two peaks coming from the two fibers will have different strain coefficients $C_\varepsilon$ and temperature coefficients $C_T$. These two peaks are associated with a single set of local strain and temperature information.

The following set of equations can be used to solve for both the strain and temperature as detected in the pair of fibers:

$$\begin{bmatrix} \Delta v_B^{\text{pk}1} \\ \Delta v_B^{\text{pk}2} \end{bmatrix} = \begin{bmatrix} C_\varepsilon^{\text{pk}1} & C_T^{\text{pk}1} \\ C_\varepsilon^{\text{pk}2} & C_T^{\text{pk}2} \end{bmatrix} \begin{bmatrix} \Delta\varepsilon \\ \Delta T \end{bmatrix} \qquad (3)$$

where $\Delta v_B^{\text{pk}1(2)} = v_B^{\text{pk}1(2)}(\varepsilon, T) - v_{B0}^{\text{pk}1(2)}(\varepsilon_0, T_0)$, $\Delta T = T - T_0$, $\varepsilon_0$ and $T_0$ are the strain and temperature corresponding to a reference Brillouin frequency $v_{B0}^{\text{pk}1(2)}(\varepsilon_0, T_0)$. If the strain coefficients $C_\varepsilon^{\text{pk}1}$ and $C_\varepsilon^{\text{pk}2}$ and temperature coefficients $C_T^{\text{pk}1}$ and $C_T^{\text{pk}2}$ for peaks 1 and 2, respectively, satisfy

$$\begin{vmatrix} C_\varepsilon^{\text{pk}1} & C_T^{\text{pk}1} \\ C_\varepsilon^{\text{pk}2} & C_T^{\text{pk}2} \end{vmatrix} \neq 0, \qquad (4)$$

the change in temperature $\Delta T$ can be given by

$$\Delta T = \frac{\Delta v_B^{\text{pk}2} \cdot C_\varepsilon^{\text{pk}1} - \Delta v_B^{\text{pk}1} \cdot C_\varepsilon^{\text{pk}2}}{C_\varepsilon^{\text{pk}1} \cdot C_T^{\text{pk}2} - C_\varepsilon^{\text{pk}2} \cdot C_T^{\text{pk}1}}, \qquad (5)$$

and the change in fiber strain can also be obtained by

$$\Delta\varepsilon = \frac{\Delta v_B^{\text{pk}1} \cdot C_T^{\text{pk}2} - \Delta v_B^{\text{pk}2} \cdot C_T^{\text{pk}1}}{C_\varepsilon^{\text{pk}1} \cdot C_T^{\text{pk}2} - C_\varepsilon^{\text{pk}2} \cdot C_T^{\text{pk}1}}. \qquad (6)$$

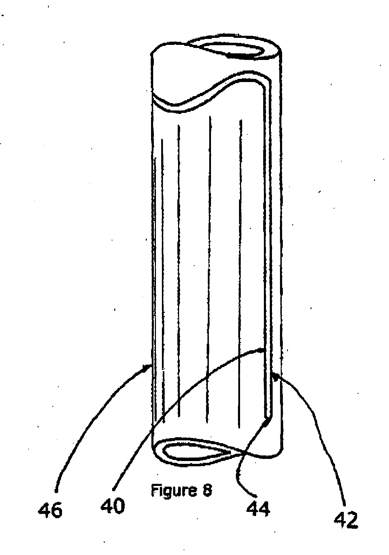

A practical example of the present invention would involve monitoring a steel pipeline to ascertain strain and temperature characteristics thereof in order to predict whether the pipeline would be susceptible to buckling. Two different kinds of single mode fiber are utilized, one being SMF-28, and the other being a single mode fiber with a different doping dose of Ge. There are different central Brillouin frequencies at room temperature, namely 12796 MHz for SMF-28 and 12479 MHz for the other fiber, as well as different strain and temperature coefficients (see Figures 7A and 7B). The two fibers 40, 42 are spliced together at one end 44 and then installed on a steel pipeline 46 (Figure 8).

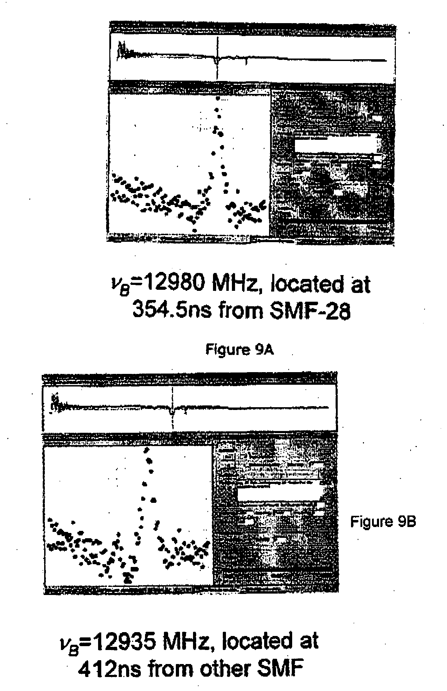

When a laser beam is directed into one of the fibers there will be two Brillouin spectra corresponding to the two fibers appearing at the same real location, but in the time domain they will appear at different times because the fibers were spliced together at one end. Figures 9A and 9B show that $v_B$ for the SMF-28 fiber is 12980 MHz at 354.5 ns, whereas $v_B$ for the other fiber is 12935 at 412 ns. This data, when utilized in the previous equations will determine the strain and temperature characteristics of the pipeline at a single point in time, to help determine whether the operating conditions of the pipeline are well within standard acceptable conditions.

**Claims**

1. A method of simultaneously determining strain and temperature characteristics of an object comprising the steps of:

   - providing first and second optical fibers having different refractive indices;
   - determining coefficients of strain and temperature for each of said

   whereby the two respective Brillouin frequency spectrum peaks of the two fibers have different strain coefficients and temperature coefficients;

   - connecting said fibers together at one end thereof;
   - securing said fibers to said object along a length thereof;
   - inputting laser light into only one of said fibers at the other end thereof;
   - measuring the Brillouin frequency for each of said fibers; and
   - calculating strain and temperature characteristics based on the coefficients of strain and temperature and the measured Brillouin frequencies for said fibers.

2. The method of claim 1 wherein each of the fibers is a single-mode optical fiber.

3. The method of claim 2 wherein one of the fibers has a cladding of pure silica and a core of pure silica doped with Ge and the other of the fibers has a cladding of pure silica doped with F and a core of pure silica.

4. The method of claim 2 wherein one of the fibers has a cladding of pure silica and a core of pure silica doped with Ge, and the other of the fibers has a cladding of pure silica and a core doped with Ge at a concentration different from that of the one fiber.

5. The method of claim 1 wherein said fibers are connected together by splicing at one end thereof.

6. A system for simultaneously determining strain and temperature characteristics of an object comprising:

   - first and second optical fibers having different refractive indices, whereby the two respective Brillouin frequency spectrum peaks of the two fibers have different strain coefficients and temperature coefficients;
   - means connecting said first and second fibers together at one end thereof;
   - means securing said fibers to the object to be monitored;
   - laser means for inputting laser light into only one of said fibers at the other end thereof;
   - means for measuring the Brillouin frequency for each of said fibers; and
   - means for calculating strain and temperature characteristics based on the coefficients of strain and temperature as well as the measured Brillouin frequencies for said fibers.

7. The system of claim 6 wherein each of the fibers is a single-mode optical fiber.

8. The system of claim 7 wherein one of the fibers has a cladding of pure silica and a core of pure silica doped with Ge and the other of the fibers has a cladding of pure silica doped with F and a core of pure silica.

9. The system of claim 7 wherein one of the fibers has a cladding of pure silica and a core of pure silica doped with Ge, and the other of the fibers has a cladding of pure silica and a core doped with Ge at a concentration different from that of the one fiber.

10. The system of claim 6 wherein the means connecting the fibers is splicing the fibers together at one end thereof.

**Patentansprüche**

1. Verfahren zum simultanen Bestimmen von Spannungs- und Temperatureigenschafen eines Gegenstandes mit folgenden Schritten:

   - Vorsehen einer ersten und einer zweiten optischen Faser, welche unterschiedliche Brechungsindizes haben;
   - Bestimmung der Spannungs- und Temperaturkoeffizienten für jede der genannten Fasern;
   - wobei die beiden entsprechenden Ausschläge im Brillouin-Frequenzspektrum der zwei Fasern unterschiedliche Spannungskoeffizienten und Temperaturkoeffizienten haben;
   - Zusammenbinden der Fasern an einem ihrer Enden;
   - Befestigen der Fasern an dem Objekt entlang einer seiner Längen;
   - Einspeisen von Laserlicht in nur eine der Fasern an ihrem anderen Ende;
   - Messen der Brillouin-Frequenz für jede der Fasern; und
   - Berechnen von Spannungs- und Temperatureigenschaften auf der Basis der Spannungs- und Temperaturkoeffizienten und der gemessenen Brillouin-Frequenzen für die genannten Fasern.

2. Verfahren nach Anspruch 1, bei welchem jede der Fasern eine optische Monomodefaser ist.

3. Verfahren nach Anspruch 2, wobei eine der Fasern eine Hülle aus reiner Silica und einen Kern aus reiner Silica, welcher mit Ge dotiert ist, hat und die andere Faser eine Hülle aus reiner Silica hat, welche mit F dotiert ist, und einen Kern aus reiner Silica.

4. Verfahren nach Anspruch 2, wobei eine der Fasern eine Hülle aus reiner Silica und einen Kern aus reiner Silica, welcher mit Ge dotiert ist, hat und die andere Faser eine Hülle aus reiner Silica hat, welche mit Ge bei einer Konzentration, die unterschiedlich von der der einen Faser ist, dotiert ist.

5. Verfahren nach Anspruch 1, bei welchem die Fasern durch Spleißen an einem ihrer Enden miteinander verbunden sind.

6. System zum simultanen Bestimmen der Spannungs- und Temperatureigenschaften eines Objektes mit folgenden Merkmalen:

   - eine erste und eine zweite optische Faser haben unterschiedliche Brechungsindizes, wobei die zwei entsprechenden Ausschläge im Brillouin-Frequenzspektrum der zwei Fasern unterschiedliche Spannungskoeffizienten und Temperaturkoeffizienten haben;
   - eine Einrichtung, welche die erste und zweite Faser an einem ihrer Enden zusammenbindet;
   - eine Einrichtung, welche die Fasern an dem zu überwachenden Gegenstand befestigt;
   - eine Lasereinrichtung zum Einleiten von Laserlicht in nur einer der Fasern an ihrem anderen Ende;
   - eine Einrichtung zum Messen der Brillouin-Frequenz für jede der Fasern und
   - eine Einrichtung zum Berechnen der Spannungs- und Temperatureigenschaften auf der Basis der Koeffizienten von Spannung und Temperatur sowie der für die genannten Fasern gemessenen Brillouin-Frequenzen.

7. System nach Anspruch 6, bei welchem jede der Fasern eine optische Monomodefaser ist.

8. System nach Anspruch 7, bei welchem eine der Fasern eine Hülle aus reiner Silica und einen Kern aus reiner Silica, welche mit Ge dotiert ist und die andere Faser eine Hülle aus reiner Silica, welche mit F dotiert ist und einen Kern aus reiner Silica hat.

9. System nach Anspruch 7, bei welchem eine der Fasern eine Hülle aus reiner Silica und einem Kern aus reiner Silica hat, welche mit Ge dotiert ist und die andere Faser eine Hülle aus reiner Silica hat und einen Kern, welcher mit Ge bei einer Konzentration, welche sich von der der anderen Faser unterscheidet, dotiert ist.

10. System nach Anspruch 6, bei welchem die Einrichtung, welche die Fasern verbindet ein Spleiß der Fasern an einem ihrer Enden ist.

**Revendications**

1. Procédé pour la détermination simultanée de caractéristiques de contrainte et de température d'un objet, comprenant les étapes de :

    - mise à disposition d'une première et d'une deuxième fibre optique présentant des indices de réfraction différents ;
    - détermination de coefficients de contrainte et de température pour chacune desdites, les deux pics des spectres de fréquence de Brillouin respectifs des deux fibres présentant des coefficients de contrainte et des coefficients de température différents ;
    - liaison desdites fibres ensemble en une extrémité correspondante ;
    - fixation desdites fibres audit objet le long d'une longueur correspondante ;
    - introduction de lumière laser dans seulement l'une desdites fibres en l'autre extrémité correspondante ;
    - mesure de la fréquence de Brillouin pour chacune desdites fibres ; et
    - calcul des caractéristiques de contrainte et de température à partir des coefficients de contrainte et de température et des fréquences de Brillouin mesurées pour lesdites fibres.

2. Procédé selon la revendication 1, chacune des fibres étant une fibre optique monomodale.

3. Procédé selon la revendication 2, l'une des fibres présentant une gaine en silice pure et un noyau en silice pure dopée par du Ge et l'autre des fibres présentant une gaine en silice pure dopée par du F et un noyau en silice pure.

4. Procédé selon la revendication 2, l'une des fibres présentant une gaine en silice pure et un noyau en silice pure dopée par du Ge et l'autre des fibres présentant une gaine en silice pure et un noyau dopé par du Ge en une concentration différente de celle de l'autre fibre.

5. Procédé selon la revendication 1, lesdites fibres étant reliées l'une à l'autre par épissure en une extrémité correspondante.

6. Système pour la détermination simultanée de caractéristiques de contrainte et de température d'un objet, comprenant :

    - une première et une deuxième fibre optique présentant des indices de réfraction différents, les deux pics des spectres de fréquence de Brillouin respectifs des deux fibres présentant des coefficients de contrainte et des coefficients de température différents ;
    - des moyens de liaison de ladite première et ladite deuxième fibre ensemble en une extrémité correspondante ;
    - des moyens de fixation desdites fibres à l'objet à surveiller ;
    - des moyens laser pour introduire de la lumière laser dans seulement l'une desdites fibres en l'autre extrémité correspondante ;
    - des moyens de mesure de la fréquence de Brillouin de chacune desdites fibres ; et
    - des moyens de calcul des caractéristiques de contrainte et de température à partir des coefficients de contrainte et de température ainsi que des fréquences de Brillouin mesurées pour lesdites fibres.

7. Système selon la revendication 6, chacune des fibres étant une fibre optique monomodale.

8. Système selon la revendication 7, l'une des fibres présentant une gaine en silice pure et un noyau en silice pure dopée par du Ge et l'autre des fibres présentant une gaine en silice pure dopée par du F et un noyau en silice pure.

9. Système selon la revendication 7, l'une des fibres présentant une gaine en silice pure et un noyau en silice pure dopée par du Ge et l'autre des fibres présentant une gaine en silice pure et un noyau dopé par du Ge en une concentration différente de celle de l'autre fibre.

10. Système selon la revendication 6, le moyen reliant les fibres étant l'épissure des fibres ensemble en une extrémité correspondante.

Figure 2
(Prior Art)

Figure 4
(Prior Art)

Figure 1
(Prior Art)

Figure 3
(Prior Art)

Figure 5

Laser 18 ──> Splitter 16 ══ 10 ══ 12 ══ 14 ══ Splitter 16 <── Laser 20

**Strain Coefficient of SMF-28**

y = 15.699x - 201916
R² = 0.9999

◆ Raw data
── Best fit

Strain (με) — Brillouin frequency shift (MHz)

Figure 7A

**Strain coefficient of SMF with different doping dose of Ge**

y = 16.21x - 202391

◆ Raw data
── Best fit

Strain (με) — Brillouin frequency shift (MHz)

Figure 7B

EP 2 110 651 B1

# Figure 6a

# Figure 6b

Figure 8

46    40    44    42

$v_B$=12980 MHz, located at
354.5ns from SMF-28

Figure 9A

Figure 9B

$v_B$=12935 MHz, located at
412ns from other SMF

**EP 2 110 651 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030103549 A1

- US 20080084914 A1